# EUROPEAN PATENT SPECIFICATION

(11) **EP 3 197 713 B1**
(45) Date of publication and mention of the grant of the patent: **01.07.2020**
(21) Application number: 15843825.9
(22) Date of filing: 23.09.2015
(51) Int. Cl.: B60N 2/50

(54) **TABLE DEVICE SITUATED IN A SPACE IN AN INTERIOR PANEL OF A VEHICLE**
IN EINEM RAUM IN EINER INNENVERKLEIDUNG EINES FAHRZEUGS BEFINDLICHE TISCHVORRICHTUNG
DISPOSITIF FORMANT TABLETTE SITUÉ DANS UN ESPACE D'UN PANNEAU INTÉRIEUR DE VÉHICULE

(30) Priority: 24.09.2014 SE 1451127
(43) Date of publication of application: 02.08.2017
(73) Proprietor: Scania CV AB, 151 87 Södertälje (SE)
(72) Inventor: RIGNER, Tomas, 147 34 Tumba (SE)
(74) Representative: Scania CV AB
(86) International application number: PCT/SE2015/050990
(87) International publication number: WO 2016/048220

(56) References cited:
- FR-A1- 2 941 895
- FR-A1- 2 984 815
- KR-U- 19980 039 342
- US-A- 6 042 168

## Description

### TECHNICAL FIELD

The invention relates to a table device situated in a space in an interior panel of a vehicle according to the preamble of claim 1. The invention relates also to a vehicle.

### BACKGROUND

Vehicles usually have a storage space situated in their instrument panel. Said storage space is normally situated in front of the front-seat passenger. Table devices with foldable extension boards may be situated in such spaces.

A problem with such table devices is that crash safety in the event of a collision may be jeopardised, particularly when an extension board is extended, resulting in risk of the passenger bumping into the extension board. There is also risk that a folded extension board may unwantedly become unfolded in a collision and thereby jeopardise crash safety.

KR200443965Y refers to a table fitted in an instrument panel. The table runs on rails and in the event of a crash it will move into the instrument panel.

FR2941895 A1 describes a retractable table unit arranged in an interior panel of a vehicle.

US6042168 A refers to a storage device which is its deployed state can be used as table device comprising a table unit with board elements.

### OBJECT OF THE INVENTION

One object of the present invention is to propose a table device situated in a space in an interior panel of a vehicle which improves collision safety.

### SUMMARY OF THE INVENTION

This and other objects indicated by the description set out below are achieved by a table device of the kind indicated in the introduction which further exhibits the features indicated in the characterising part of the attached independent claim. Preferred embodiments of the table device are defined in the attached dependent claims.

The invention achieves the objects with a table device situated in front of a vehicle occupant in a space in an interior panel of a vehicle and comprising a table unit with extension board elements and a rail configuration with at least two mutually parallel rail tracks, relative to which rail configuration the table device Is arranged for movement in the longitudinal extent of the vehicle between a deployed state for use and a retracted state, the rail configuration being arranged to run in the space with a forward slope downwards in the vehicle's longitudinal extent, and each rail track being provided with a hollow suited to bringing the table unit from a slope in the retracted state to a substantially definite horizontal position in the deployed state. Safety in a collision is thereby improved in that the table unit will be released from the hollow which during normal forward movement of the vehicle keeps the table unit in the deployed state, and will, as a result of the slope of the rail configuration, slide back into the space. The slope of the rail configuration also facilitates manual retraction in that the table unit need only be disengaged manually from the hollow and thus be released in order thereafter to return automatically to the space as a result of the slope. The hollow also makes it possible for the table unit to be effectively kept in the deployed state. The slope of the rail configuration and hence of the space makes it possible to have a corresponding slope of the instrument panel in way of a front-seat passenger, thereby providing the driver with better visibility and making it easier for him/her to notice any obstacles.

In one embodiment of the table device the respective rail tracks each comprise an upper track and, running beneath it, a lower track. These upper and lower tracks may thus be used as an effective means for bringing the table unit from the sloping state to the substantially horizontal state.

In one embodiment of the table device the hollow is situated on the respective upper rail track. The hollow in the upper track may thus be used as an effective means for bringing the table unit from the sloping state to the substantially horizontal state.

In one embodiment of the table device the table unit comprises at least one upper running means for each upper rail track and at least one lower running means for each lower rail track, resulting in an effective way of deploying and retracting the table unit along the tracks of the rail configuration.

In one embodiment of the table device said upper running means is arranged to rest in the hollow when the table unit Is in the deployed state, thus effectively keeping the table unit in the deployed state in which it is kept substantially horizontal.

In one embodiment of the table device said lower running means is arranged to cooperate with the respective lower rail track to keep the table unit in the deployed state. The table unit will thus be effectively kept substantially horizontal in the deployed state.

In one embodiment the table device is further provided with a locking device comprising a resilient locking element situated on the underside of the table unit and a hook portion which is situated on the rail configuration and is arranged to cooperate lockingly with the locking element when the table unit is in the retracted state. Collision safety is thus further improved in that the table unit is kept lockingly in the space, with consequently no risk of being unwantedly deployed.

In one embodiment of the table device the resilient locking element comprises a gripping portion for releasing the locking element from the hook portion for deployment of the table unit. This means that effective deployment of the table unit is only possible when its use is desired.

In one embodiment of the table device said space is arranged to exert a securing effect for the locking in the retracted state. Collision safety is thus further improved in that the table unit is lockingly held in the space, with consequently no risk of being unwantedly deployed.

In one embodiment of the table device, the table unit In the deployed state is arranged to respond to a force directed forwards in the vehicle's longitudinal extent, caused for example by a collision, by being released from the definite position in the rail configuration so that the table unit becomes retracted, which is facilitated by said slope of the rail configuration. Collision safety is thus improved in that the table unit will be released from the hollow which during normal forward movement of the vehicle keeps the table unit in the deployed state, and will, as a result of the slope of the rail configuration, slide back into the space.

### DESCRIPTION OF DRAWINGS

The present invention will be better understood by reading the detailed description set out below in conjunction with the attached drawings, in which the same reference notations are used for similar items throughout the various views, and in which:
Fig. 1a depicts a schematic side view of a table device in a retracted state according to an embodiment of the present invention;
Fig. 1b depicts a schematic side view of the table device in Fig. 1a in a deployed state;
Fig. 1c depicts a schematic side view of the table device in Fig. 1a in a deployed state with board elements extended;
Fig. 1d depicts a schematic front view of the table device in Fig. 1a;
Fig. 2a depicts a schematic plan view from beneath of the table device in Fig. 1a in the retracted state;
Fig. 2b depicts a schematic plan view from beneath of the table device in Fig. 1a in the deployed and extended state;
Fig. 3a depicts a schematic sideview in cross-section of the table device in Fig. 1a situated in a space in an interior panel of a vehicle in the retracted state;
Fig. 3b depicts a schematic sideview in cross-section of the table device in Fig. 1a situated in a space in an interior panel of a vehicle in the deployed and extended state.
Fig. 4 depicts a schematic sideview in cross-section of the table device in Fig. 1a situated in a space in an interior panel of a vehicle in the retracted state showing the locking device of the table device; and
Fig. 5 depicts schematically a vehicle according to an embodiment of the present invention.

### DESCRIPTION OF EMBODIMENTS

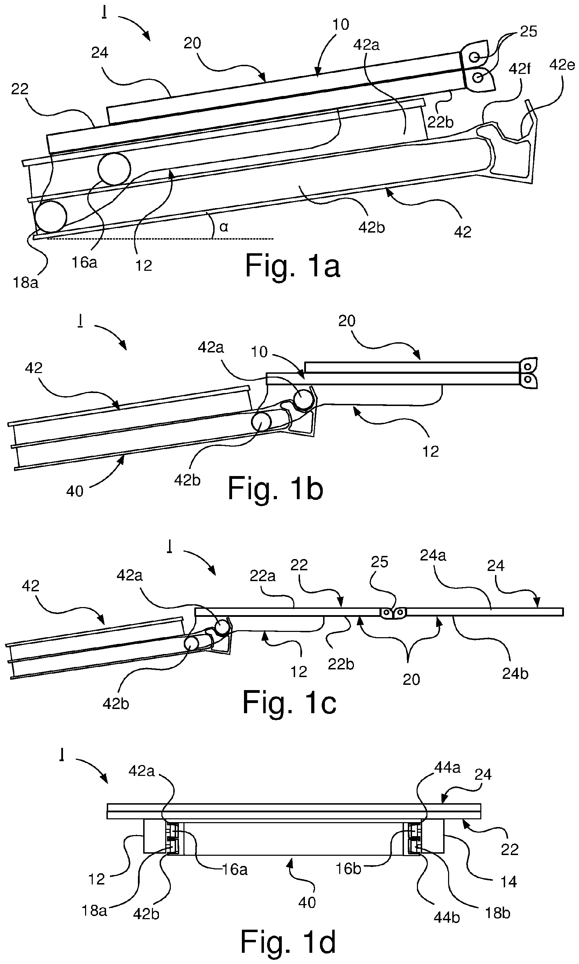

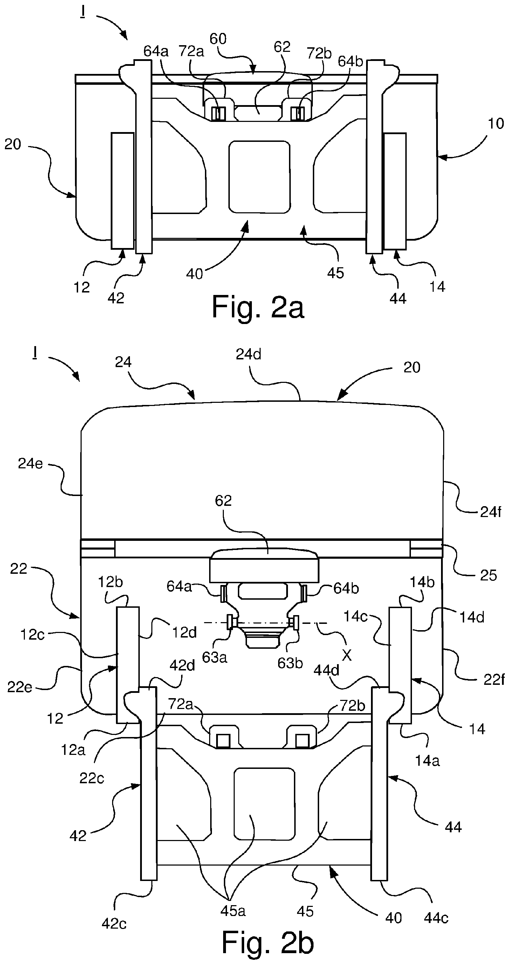

Figs. 1a-d and 2a-b depict schematically various views and states of a table device I according to an embodiment of the present invention. Figs. 1a-c are partly transparent for illustrative purposes.

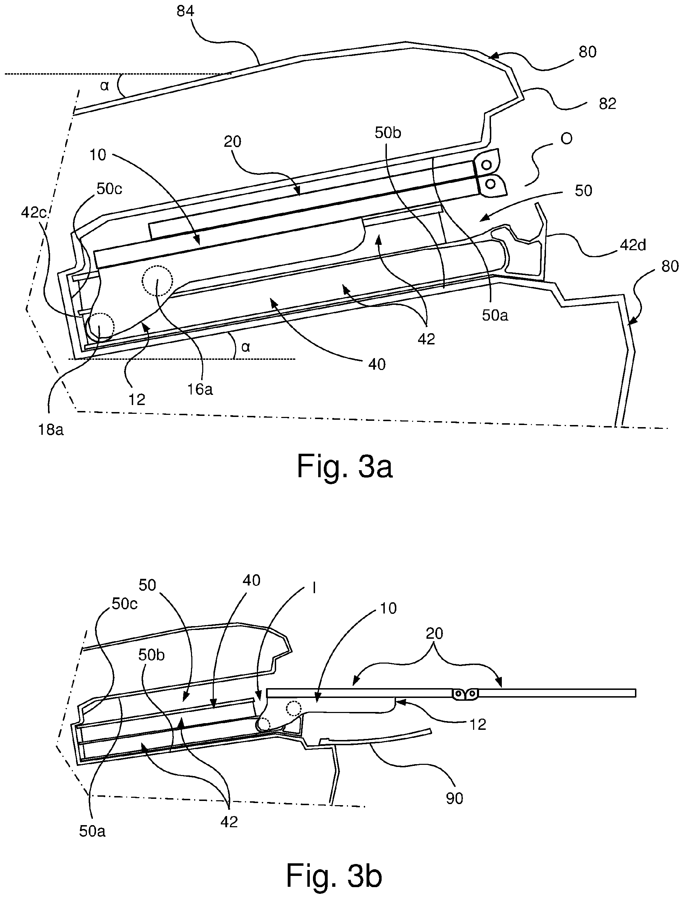

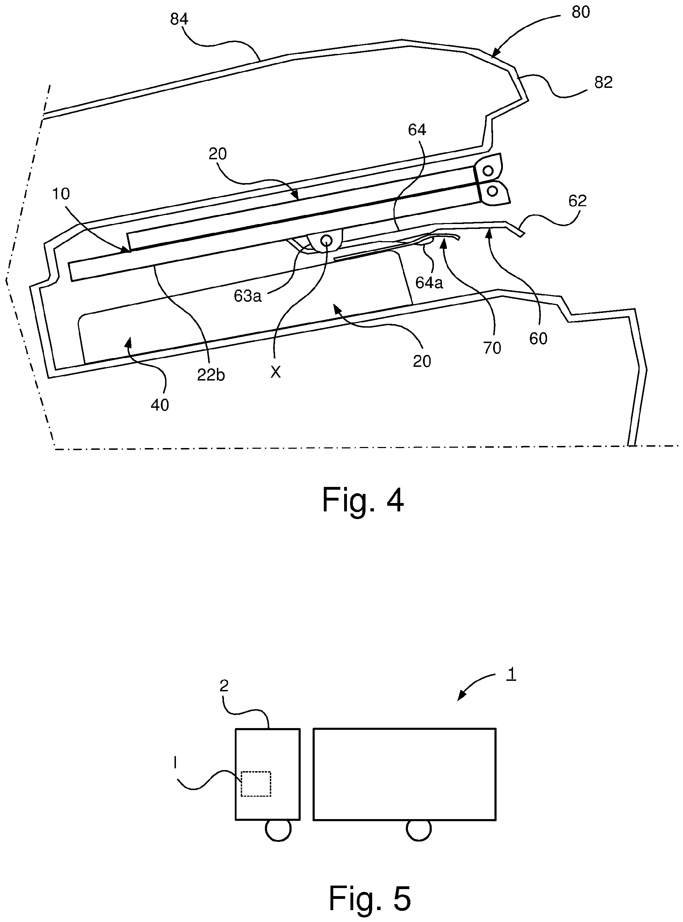

The table device is intended to be situated in front of a vehicle occupant in a space 50 in an interior panel of a vehicle, as depicted in Figs. 3a-b and Fig. 4.

The table device I comprises a table unit 10 with a board element 20. The table unit in this embodiment is provided with a foldable board element 20 which comprises a first board portion 22 and, hingingly connected to the latter, a second board portion 24.

The first board portion 22 has an upper side 22a and an opposite underside 22b. The first board portion further has a front side 22c intended to run transversely to the vehicle's longitudinal extent, to face forwards in the vehicle's longitudinal extent and to serve as the front side of the board element 20, and a rear side 22d which is opposite to the front side 22c and intended to be connected hingingly via a hinge means 25 to the second board portion 24. The first board portion 22 further has a left side 22e and opposite right side 22f which run in the vehicle's longitudinal extent.

The second board portion 24 has an upper side 24a and an opposite underside 24b. The second board portion further has a rear side 24d intended to run transversely to the vehicle's longitudinal extent, to face rearwards in the vehicle's longitudinal extent and to serve as the rear side of the board element 20 in a deployed state, and a front side 22c which is opposite to the rear side and intended to be connected hingingly to the first board portion 22 via said hinge means 25. The second board portion 24 further has a left side 24e and an opposite right side 24f which run in the vehicle's longitudinal extent.

The first board portion 22 has a longitudinal extent intended to run in the vehicle's longitudinal extent and somewhat exceeding the longitudinal extent of the second board portion 24.

The second board portion 24 is arranged for pivoting at the hinge means 25 between a folded state in which the second board portion 24 rests on the first board portion 22 and an extended state in which the second board portion is in the substantially same plane as the first board portion.

The table unit 10 is provided with first and second bearing arms 12, 14 arranged to support running means 16a, 18a, 16b, 18b. The first and second bearing arms are situated at a distance from one another on the underside 22b of the first board portion 22. The first and second bearing arms are arranged to run parallel relative to one another in the longitudinal extent of the first board portion 22 and hence of the vehicle. The first and second bearing arms are arranged to partly protrude in front of the front side 22c of the first board portion.

The first and second bearing arms are arranged to run along somewhat more than half of the first board portion.

The first and second bearing arms 12, 14 each have a front portion 12a, 14a protruding forward obliquely downwards from a rear portion 12b, 14b which runs along the first board portion 22. The first and second bearing arms each have a left side 12c, 14c and a right side 12d, 14d.

The first bearing arm 12 is arranged to support an upper running means 16a and a lower running means 18a. The second bearing arm 14 is arranged to support an upper running means 16b and a lower running means 18b. The lower running means 18a, 18b of the respective bearing arms 12, 14 are situated on the protruding portions 12a, 14a of the bearing arms.

The table unit 10 is thus provided with running means 16a, 18a, 16b, 18b arranged to be supported by the first and second bearing arms 12, 14. The running means 16a, 18a, 16b, 18b in one variant take the form of wheels. In one variant the wheels are bearingly supported by ball bearings.

The upper and lower running means 16a, 18a of the first bearing arm 12 are situated on its right side 12d. The upper and lower running means 16b, 18b of the second bearing arm 14 are situated on the latter's left side 14c. The upper and lower running means 16a, 18a of the first bearing arm 12 and the upper and lower running means 16b, 18b of the second bearing arm 14 face towards one another. The upper running means 16a of the first bearing arm 12 is aligned with the upper running means 16b of the second bearing arm, and the lower running means 18a of the first bearing arm is aligned with the lower running means 18b of the second bearing arm.

The table device I is further provided with a rail configuration 40 intended to be situated in the space 50 in an interior panel of a vehicle, as depicted in Figs. 3a-b and Fig. 4.

The rail configuration 40 comprises two mutually parallel rail track elements 42, 44, viz. a first track element 42 and, running parallel with it, a second track element 44. These first and second rail track elements are arranged to run in the vehicle's longitudinal extent.

The first rail track element 42 comprises an upper track 42a and a lower track 42b. The second rail track element 44 comprises an upper track 44a and a lower track 44b.

The upper and lower tracks 42a, 42b of the first rail track element are arranged to face to the right. The upper and lower tracks 44a, 44b of the second rail track element are arranged to face to the left, towards the upper and lower tracks 42a, 42b of the first rail track element.

The first and second rail track elements 42, 44 are connected to one another by a support means 45 which is situated between them and is intended to strengthen the rail configuration 40 and stabilise the first and second rail track elements. The support means 45 has weight-reducing apertures 45a delineating forward and rear arm portions which connect the forward and rear portions of the respective rail track elements.

As may be seen in Fig. 2b, the first and second rail track elements 42, 44 each have a front portion 42c, 44c intended to face forwards in the vehicle's longitudinal extent in the space 50, and an oppositely directed rear portion 42d, 44d intended to face rearwards in the vehicle's longitudinal extent close to the aperture of the space 50, as depicted in Figs. 3a-b and Fig. 4.

The first and second rail track elements 42, 44 each have a hollow 42e, 44e situated on the upper rail track 42a, 44a. The hollow 42e, 44e in each upper rail track is situated close to the latter's rear portion 42d, 44d.

The upper tracks 42a, 44a of the first and second rail track elements each have an increasing slope 42f, 44f close to and ahead of the hollow 42e, 44e to enhance the effect of the hollow during cooperation with the table unit 10.

The table unit 10 is arranged for movement relative to the rail configuration 40 between a deployed state for use and a retracted state. The rail configuration is arranged to run in the space 50 with a forward slope downwards in the vehicle's longitudinal extent, as depicted in Figs. 3a-b and Fig.4. The rail configuration is arranged to run with a forward slope downwards in the vehicle's longitudinal extent at an angle α. The table unit in the retracted state is consequently arranged to run at a corresponding angle α.

The hollows 42e, 44e on the respective upper rail tracks 42a, 44a are arranged to bring the table unit 10 from the slope in the retracted state to a substantially definite horizontal position in the deployed state.

The upper running means 16a of the first bearing arm 12 is arranged to run in the upper rail track 42a of the first rail track element 42. The lower running means 18a of the first bearing arm 12 is arranged to run in the lower rail track 42b of the first rail track element.

The upper running means 16b of the second bearing arm 14 is arranged to run in the upper rail track 44a of the second rail track element 44. The lower running means 18b of the second bearing arm 14 is arranged to run in the lower rail track 44b of the second rail track element.

The upper running means 16a, 16b for the respective upper rail tracks 42a, 44a and the lower running means 18a, 18b for the respective lower rail tracks 42b, 44b are arranged, for deployment of the table unit, to run in conjunction from a forward position on the respective upper and lower rail tracks to the deployed position.

The upper running means 16a, 16b for the respective upper rail tracks 42a, 44a are arranged, for deployment of the table unit, to run from a forward position on the respective upper rail tracks in the retracted state along the increasing slope close to the hollows 42e, 44e before going on to the deployed state by sliding down and resting in the hollows 42e, 44e, which will thus keep the table unit 10 in a definite position.

The lower running means 18a, 18b for the respective lower rail tracks 42b, 44b are arranged to run from a forward position on the respective lower rail tracks in the retracted state to a rear position in the deployed state, in which deployed state the lower running means are arranged to cooperate securingly with the respective lower rail tracks 42b, 44b. Each of the respective lower rail tracks has accordingly an upper rail portion against which the lower running means 18a, 18b act in the deployed state. These upper rail portions are thus arranged to keep the running means 18a, 18b in the deployed state so that the table unit 10 is kept substantially horizontal.

In the table unit's retracted state, the rail configuration 40 will be below the board element 20 and hence below the first board portion 22. In the table unit's retracted state the rail configuration will be between the first and second bearing arms 12, 14.

The upper and lower running means 16a, 16b of the first bearing arm 12 consequently face towards the first rail track element 42, and the upper and lower running means 18a, 18b of the second bearing arm 14 towards the second rail track element 44.

The table device I is further provided with a locking device 60, 70 for keeping the table device locked in the retracted state. The locking device 60, 70 is arranged to keep the table device locked in the retracted state in the space 50 as depicted in Fig. 4. The locking device is also depicted in Figs. 2a-b but has been omitted in Figs.1a-c and Figs. 3a-b.

The locking device 60, 70 comprises a resilient locking element 60 situated on the underside of the table unit 10. It further comprises a hook portion 70 attached to the rail configuration 40 and arranged to cooperate lockingly with the locking element 60 when the table unit is in the retracted state.

The resilient locking element 60 comprises a gripping portion 62 for releasing the locking element 60 from the hook portion 70 for deployment of the table unit.

The resilient locking element 60 is situated centrally on the underside 22b of the first board portion 22 of the board element 20 of the table unit 10. This resilient locking element is arranged to run from a central region on the underside 22b of the first board portion substantially to the rear side 22d of the first board portion.

The resilient locking element 60 has a front side 60a close to which it is arranged to be fastened to the underside 22b of the first board portion 22. The locking element 60 is arranged to be fastened between two opposite fastening means 63a, 63b so that it is allowed to be resilient about an axis X which runs transversely to the longitudinal extent of the first board portion 22 and hence of the vehicle.

The resilient locking element 60 comprises a resilient portion 64 arranged to run rearwards from the fastening means 63a, 63b at a distance from the underside 22b of the first board portion 22. The gripping portion 62 is situated close to the rear side of the resilient locking element 60, and hence of the resilient locking portion 64, to provide an operator with easy access.

The resilient portion 64 of the locking element 60 has on each side a flange portion 64a, 64b which runs obliquely down rearwards.

The hook portion 70 is situated centrally on the upper side of the rail configuration 40 and arranged to run from a rear region of the rail configuration and protrude rearwards beyond the rail configuration by a protruding portion 72 which comprises hooks 72a, 72b in the form of annular apertures situated at a distance from one another in order to be able to cooperate lockingly with the flange portions 64a, 64b of the resilient locking element 60.

In the retracted state of the table unit the respective flange portions 64a, 64b of the resilient locking element 60 are thus arranged to be brought into locking engagement with the corresponding hooks 72a, 72b of the hook portion 70. When the table unit 10 is returning from the deployed state to the retracted state, the resilient portion 64 is arranged to cooperate with the hook portion 70 so that the resilient portion 64 is initially spring-loaded against an elevation on the rear region of the hook portion 70 when the respective flange portions 64a , 64b are brought into contact, bringing these latter into engagement with the respective hooks 72a, 72b when the flange portions arrive over the apertures of the respective hooks, thereby locking the table unit 10.

The resilient locking element 60 is configured to act with a resilient force in such a way that the flange portions 64a, 64b stay in the hooks 72a, 72b. For deployment of the table unit 10, the locking element 60 is arranged to be brought out of its locked state by an operator taking hold of the gripping portion 62 and exerting a force greater than the spring force which keeps the flange portions 64a, 64b in engagement with the hook portion 70, making it easy to pull out the table unit 10 and unfold the board portions 22, 24 of the board element 20 so that the table unit can be used.

In one embodiment of the table device I said space 50 is arranged to exert a securing effect for the locking in the retracted state. In this case the table device in the retracted state is accommodated tightly in the space 50 so that the upper side 50a of the space 50 ensures that the table unit 10 is not allowed to move far enough upwards for the locking element 60 to be brought out of its state of locking with the hook portion 70.

In one embodiment of the table device I, the table unit in the deployed state is arranged to respond to a force directed forwards in the vehicle's longitudinal extent, caused for example by a crash, by being released from the definite state in the rail configuration 40 so that it becomes retracted, which is facilitated by said slope of the rail configuration.

As previously mentioned, Figs. 3a-b and Fig. 4 depict schematic side views in cross-section of the table device I situated in a space 50 in an interior panel 80 of a vehicle. The interior panel takes the form of an instrument panel 80.

Fig. 4 depicts a schematic side view in cross-section of the table device I in Fig. 1a situated in a space 50 in an interior panel of a vehicle in the retracted state, showing the locking device 60, 70 of the table device.

In one variant said space 50 is intended to be an integral part 80 of an instrument panel 80 of the vehicle. Said space 50 is thus intended to be situated in front of a vehicle occupant.

Said space 50 is arranged to be closed by a cover 90 which is only depicted in Fig. 3b. In an openable state this cover is arranged to be folded down rearwards relative to the vehicle. The cover is arranged for pivoting between an open state and a closed state. In the closed state it is arranged to substantially cover the space 50 containing the table device I in the retracted state. In the open state the cover is arranged to allow access to an suitably shaped aperture O in the space 50 and hence to the gripping portion 62 of the table device I, for deployment of the table unit 10.

The space 50 is arranged to run with a forward slope downwards in the vehicle's longitudinal extent at an angle α. As may be seen in Fig. 3b, the space 50 has an internal upper side 50a and an internal lower side 50b and a front side 50c. The rail configuration 40 is situated on the lower side 50b, i.e. the bottom, of the space 50. In one variant the rail configuration is arranged to be fitted on the lower side 50b of the space 50 by threaded connections.

The instrument panel 80 has a front side 82 and an upper side 84. Its upper side has a slope which in one variant corresponds substantially to the slope of the space 50 and hence of the table device I. Providing the instrument panel with a corresponding forward slope downwards in the vehicle's longitudinal extent close to a front-seat passenger will provide the vehicle's driver with better visibility and make it easier for him/her to notice any obstacles.

The instrument panel 80 is arranged to run transversely to the vehicle's longitudinal extent, and the aperture O of the space 50 and the cover 90 intended to close the space 50 is accordingly an integral part of the instrument panel. The instrument panel's front side 82 in which the space 50 for the table device I is situated will face the vehicle occupant and be substantially vertical or slope slightly forward upwards in the vehicle's longitudinal extent.

Fig. 5 depicts schematically a motor vehicle 1 according to an embodiment of the present invention. The vehicle exemplified is a heavy vehicle in the form of a truck with a cab 2. The vehicle may be any suitable vehicle such as a car, a military vehicle, a boat, a train or the like. The vehicle has in its cab a table device I according to the present invention.

The above description of the preferred embodiments of the present invention is provided for illustrative and descriptive purposes. It is not intended to be exhaustive, nor to restrict the invention to the variants described. Many modifications and variations will obviously suggest themselves to one skilled in the art. The embodiments have been chosen and described in order best to explain the principles of the invention and their practical applications and thereby enable one skilled in the art to understand the invention for different embodiments and with the various modifications appropriate to the intended use.

## Claims

1. A table device (I) suitable to be situated in front of a vehicle occupant in a space (50) in an interior panel of a vehicle (1) comprising a table unit (10) with a board element (20) and a rail configuration (40) with at least two mutually parallel rail track elements (42, 44) each comprising an upper rail track (42a, 44a) and, running beneath it, a lower rail track (42b, 44b), relative to which rail configuration (40) the table unit (10) is suitable to be arranged for movement in the vehicle's longitudinal extent between a deployed state for use and a retracted state, in which the table unit (10) is provided with at least one upper running means (16a, 16b) cooperating with each upper rail track (42a, 44a) and at least one lower running means (18a, 18b) cooperating with each lower rail track (42b, 44b) whereby the rail configuration (40) is suitable to be arranged to run in the space (50) with a slope downwards protruding forward obliquely in the vehicle's longitudinal extent and to bringing the table unit (10) from a slope in the retracted state to a substantially definite horizontal position in the deployed state, **characterised in that** the respective rail track elements (42, 44) being provided with a hollow (42e, 44e) situated on the respective upper rail tracks (42a, 44a) in which said upper running means (16a, 16b) are arranged to slide down in and rest when the table unit is in the deployed state and wherein said respective lower rail tracks (42b, 44b) each has an upper rail portion against which the lower running means (18a, 18b) act in the deployed state.

2. A table device according to claim 1, in which said lower running means (18a, 18b) are arranged to cooperate securingly with the respective lower rail tracks (42b, 44b) when the table unit is in the deployed state.

3. A table device according to any one of claims 1-2, further provided with a locking device (60, 70) comprising a resilient locking element (60) situated on the underside of the table unit (10) and a hook portion (70) which is situated on the rail configuration (40) and is arranged to cooperate lockingly with the locking element (60) when the table unit is in the retracted state.

4. A table device according to claim 3, in which the resilient locking element (60) comprises a gripping portion (62) for releasing the locking element (60) from the hook portion (70) for deployment of the table unit.

5. A table device according to any one of the foregoing claims, in which the table unit (10) in the deployed state is arranged to respond to a force directed forwards in the vehicle's longitudinal extent, caused for example by a crash, by being released from the defined state in the rail configuration (40) so that the table unit (10) becomes retracted, which is facilitated by said slope of the rail configuration (40).

6. A vehicle (1) provided with a table device (1) according to any one of claims 1-6.

## Patentansprüche

1. Tischvorrichtung (I), die dazu geeignet ist, vor einem Fahrzeuginsassen in einem Raum (50) in einer Innenverkleidung eines Fahrzeugs (1) angeordnet zu sein, umfassend eine Tischeinheit (10) mit einem Brettelement (20) und einer Schienenanordnung (40), die wenigstens zwei wechselseitig parallele Schienenbahnelemente (42, 44) aufweist, welche jeweils eine obere Schienenbahn (42a, 44a) und eine darunter verlaufende untere Schienenbahn (42b, 44b) umfassen, wobei die Tischeinheit (10) dazu geeignet ist, bezüglich der Schienenanordnung (40) zur Bewegung in der Fahrzeuglängsrichtung angeordnet zu werden zwischen einem ausgefahrenen Zustand zur Benutzung und einem eingefahrenen Zustand, wobei die Tischeinheit (10) mit wenigstens einer oberen Laufeinrichtung (16a, 16b), die mit jeder oberen Schienenbahn (42a, 44a) zusammenwirkt, und wenigstens einer unteren Laufeinrichtung (18a, 18b) versehen ist, die mit jeder unteren Schienenbahn (42b, 44b) zusammenwirkt, wodurch die Schienenanordnung (40) dazu geeignet ist, zum Laufen in dem Raum (50) mit einer Abwärtsneigung und nach vorne schräg in der Fahrzeuglängsrichtung hervorstehend angeordnet zu werden, und dazu, die Tischeinheit (10) aus einer Schräge in dem eingefahrenen Zustand in eine im Wesentlichen festgelegte Horizontalstellung in dem ausgefahrenen Zustand zu bringen,
**dadurch gekennzeichnet, dass** die entsprechenden Schienenbahnelemente (42, 44) mit einem auf den zugehörigen oberen Schienenbahnen (42a, 44a) angeordnetem Hohlraum (42e, 44e) versehen sind, in dem die oberen Laufeinrichtungen (16a, 16b) zum Herunterrutschen und Ruhen angeordnet sind, wenn die Tischeinheit sich in dem ausgefahrenen Zustand befindet, wobei die entsprechenden unteren Schienenbahnen (42b, 44b) jede einen oberen Schienenabschnitt hat, gegen den die unteren Laufeinrichtungen (18a, 18b) in dem ausgefahrenen Zustand wirken.

2. Tischvorrichtung nach Anspruch 1, bei der die unteren Laufeinrichtungen (18a, 18b) dazu angeordnet sind, sichernd mit den entsprechenden unteren Schienenbahnen (42b, 44b) zusammenzuwirken, wenn die Tischeinheit sich in dem ausgefahrenen Zustand befindet.

3. Tischvorrichtung nach einem der Ansprüche 1 bis 2, die ferner mit einer Arretiereinrichtung (60, 70) versehen ist, welche ein federnd elastisches Arretierelement (60), das sich auf der Unterseite der Tischeinheit (10) befindet, und ein Hakenteil (70) aufweist, welches sich auf der Schienenanordnung (40) befindet und dazu angeordnet ist, arretierend mit dem Arretierelement (60) zusammenzuwirken, wenn die Tischeinheit sich in dem eingefahrenen Zustand befindet.

4. Tischvorrichtung nach Anspruch 3, bei der das federnd elastische Arretierelement (60) ein Griffteil (62) zum Lösen des Arretierelements (60) von dem Hakenteil (70) zum Ausfahren der Tischeinheit aufweist.

5. Tischvorrichtung nach einem der vorhergehenden Ansprüche, bei der die Tischeinheit (10) im ausgefahrenen Zustand dazu angeordnet ist, auf eine in der Fahrzeuglängsrichtung vorwärts gerichtete Kraft, die beispielsweise durch einen Unfall hervorgerufen wird, zu reagieren, indem sie aus dem festgelegten Zustand in der Schienenanordnung (40) gelöst wird, sodass die Tischeinheit (10) eingefahren wird, was durch die Neigung der Schienenanordnung (40) erleichtert wird.

6. Fahrzeug (1), das mit einer Tischvorrichtung (1) nach einem der Ansprüche 1 bis 5 ausgestattet ist.

## Revendications

1. Dispositif de table (I) adapté pour être situé devant un occupant de véhicule dans un espace (50) dans un panneau intérieur d'un véhicule (1) comprenant une unité de table (10) avec un élément de planche (20) et une configuration de rail (40) avec au moins deux éléments de voie de rail (42, 44) mutuellement parallèles comprenant chacun une voie de rail supérieure (42a, 44a) et, passant en dessous, une voie de rail inférieure (42b, 44b), par rapport à laquelle configuration de rail (40) l'unité de table (10) est apte à être agencée pour un déplacement dans une étendue longitudinale du véhicule entre un état déployé pour utilisation et un état rétracté, dans lequel l'unité de table (10) est pourvue d'au moins un moyen de roulement supérieur (16a, 16b) coopérant avec chaque voie de rail supérieure (42a, 44a) et au moins un moyen de roulement inférieur (18a, 18b) coopérant avec chaque voie de rail inférieure (42b, 44b) grâce à quoi la configuration de rail (40) est apte à être agencée pour courir dans l'espace (50) avec une inclinaison vers le bas faisant saillie vers l'avant obliquement dans l'étendue longitudinale du véhicule et pour amener l'unité de table (10) d'une inclinaison à l'état rétracté à une position horizontale sensiblement définie à l'état déployé, **caractérisé** en en ce que les éléments de voie de rail respectifs (42, 44) sont pourvus d'un creux (42e, 44e) situé sur les voies de rail supérieurs respectifs (42a, 44a) dans lesquels lesdits moyens de roulement supérieurs (16a, 16b) sont agencés pour coulisser vers le bas et reposer lorsque l'unité de table est dans l'état déployé et dans lequel lesdites voies de rail inférieures respectives (42b, 44b) ont chacune une partie de rail supérieure contre laquelle les moyens de roulement inférieurs (18a, 18b) agissent dans l'état déployé.

2. Dispositif de table selon la revendication 1, dans lequel lesdits moyens de roulement inférieurs (18a, 18b) sont agencés pour coopérer de manière sûre avec les voies de rail inférieures respectives (42b, 44b) lorsque l'unité de table est dans l'état déployé.

3. Dispositif de table selon l'une quelconque des revendications 1-2, fourni en outre avec un dispositif de verrouillage (60, 70) comprenant un élément de verrouillage résilient (60) situé sur le dessous de l'unité de table (10) et une partie de crochet (70) qui est située sur la configuration du rail (40) et est agencée pour coopérer de manière verrouillée avec l'élément de verrouillage (60) lorsque l'unité de table est dans l'état rétracté.

4. Dispositif de table selon la revendication 3, dans lequel l'élément de verrouillage résilient (60) comprend une partie de serrage (62) pour la libération de l'élément de verrouillage (60) de la partie de crochet (70) pour le déploiement de l'unité de table.

5. Dispositif de table selon l'une quelconque des revendications précédentes, dans lequel l'unité de table (10) dans l'état déployé est agencée pour répondre à une force dirigée vers l'avant dans l'étendue longitudinale du véhicule, causée par exemple par un accident, en étant libérée de l'état défini dans la configuration du rail (40) de sorte que l'unité de table (10) se rétracte, ce qui est facilité par ladite inclinaison de la configuration du rail (40).

6. Véhicule motorisé (1) fourni avec un dispositif de table (1) selon l'une quelconque des revendications 1-6.
